# EUROPEAN PATENT SPECIFICATION

(11) **EP 0 797 926 B1**
(45) Date of publication and mention of the grant of the patent: **17.07.2002**
(21) Application number: 96104829.5
(22) Date of filing: 27.03.1996
(51) Int. Cl.: A23J 3/08, A23J 3/14, A23J 3/16, A23J 1/20, A23L 1/015, A23L 1/211, A23L 1/0524, A23L 1/054, A23L 1/0532, A23L 1/0526, A23L 1/053, A23L 1/0534

(54) **Protein purification**
Reinigung von Proteinen
Purification de protéines

(43) Date of publication of application: 01.10.1997
(73) Proprietor: SOCIETE DES PRODUITS NESTLE S.A., 1800 Vevey (CH)
(72) Inventor: Tolstoguzov, Vladimir Borisovich, 1009 Pully (CH); Rivier, Vincent, 1033 Cheseaux (CH)
(74) Representative: Pate, Frederick George

(56) References cited:
- DE-C- 11 242
- DE-C- 669 225
- DE-C- 690 979
- DE-C- 702 866
- GB-A- 539 381
- FOOD HYDROCOLLOIDS, vol. 2, no. 5, 1988, pages 339-370, XP002008840 TOLSTOGUZOV: "SOME PHYSICO-CHEMICAL ASPECTS OF PROTEIN PROCESSING INTO FOODSTUFFS"
- DATABASE WPI Week 8241 Derwent Publications Ltd., London, GB; AN 82-87488 XP002011982 & SU-A-888 910 (HETEROORG CPDS AS ) , 15 December 1981
- CARBOHYDRATE POLYMERS, vol. 2, no. 3, 1982, pages 163-170, XP000601464 BOGRACHEVA ET AL: "use of polysaccharides to remove lipids from the protein globulin fraction of baker's yeast"
- DATABASE WPI Week 8344 Derwent Publications Ltd., London, GB; AN 83-806506 XP002011983 & SU-A-986 379 (HETEROORGAN CPDS) , 7 January 1983

## Description

The present invention relates to a method of purifying proteins more especially to the removal of contaminating, antinutritional, undesirable or toxic components from protein media.

In Food Hydrocolloids Vol. 2 No. 3 pp. 195-207, 1988, there is described a method of purifying and concentrating protein solutions, a method called membraneless osmosis.

The basic idea underlying the membraneless osmosis process involves two physico-chemical phenomena (i) the phase separation in aqueous mixed solutions of biopolymers differing in their chemical composition; and (ii) the difference between the above mentioned biopolymers in their affinity for water. This means that mixtures of protein and polysaccharide solutions can separate into two phases, one which is relatively rich in the protein and another which is relatively rich in the polysaccharide. The difference between the concentrations of macromolecular components in the co-existing phases may be 10-fold or even more. Unlike the osmosis phenomenon, i.e. diffusion transfer of a solvent from the solution through a semi-permeable membrane separating the solvent from the solution, the membraneless osmosis process uses two aqueous solutions of macromolecular substances with different solvent chemical potentials. The function of a membrane in this process is performed by the interface between the two phases. This process is called membraneless osmosis, because it involves the transfer of a solvent, namely water, from one solution to another through the interface between the two phases. In other words, the membraneless osmosis uses two types of phase-forming macromolecular substances. One is a target to be concentrated, while the other, more hydrophilic, is diluted as the former is concentrated. Food proteins are concentrated using polymers suitable for use in foodstuffs. Usually these are polysaccharides.

Generally, membraneless osmosis may be worthwhile, as an industrial-scale process, only if polysaccharides can be recovered more easily and cheaply from the dilute solution than proteins. It is therefore critically important to recycle the polysaccharide - to recover it from the dilute polysaccharide phase and re-use it in the process. It is also possible to make use of dilute polysaccharide solutions for some other purpose, e.g. to produce food products such as various drinks, jellies and whipped products. The use of anionic polysaccharides seems to be most promising, because it is easy to precipitate them from dilute solutions in the form of complexes with proteins at pH values below the protein isoelectric point.

In the above described method of purifying and concentrating protein solutions by membraneless osmosis, the protein material used is either a pure protein such as casein or a complex material containing protein from natural food systems such as skimmed milk protein, green leaf juice or baker's yeast protein. There is no mention of proteins which have been contaminated either ecologically due to local ecological conditions such as in mountain regions or by man due, for example, to industrial or agricultural activities. Such proteins may contain undesirable components such as antinutritional, toxic, heavy metal or radioactive element contaminants.

Currently, the removal of undesirable, contaminating, antinutritional or toxic components from protein material containing such components is very difficult to realise on an industrial scale and is a cumbersome, time-consuming and expensive operation involving techniques such as ionexchange chromatography, ultrafiltration, microfiltration or reverse osmosis etc. For instance, an ion exchanger makes use of synthetic cross-linked polymers in the form of small solid particles and the high pressures used cause hydrodynamic problems for the small particles and can destroy them.

We have found that contaminants such as heavy metals or radioactive elements, undesirable, antinutritional or toxic components may be removed from proteins cheaply, easily and quickly by a process which we believe is membraneless osmosis.

According to the present invention, there is provided the use of a membraneless osmosis process for removing antinutritional, toxic, heavy metal or radioactive element contaminants from protein material contaminated either ecologically or by industrial or agricultural activities characterised in that the protein material is contacted with a polysaccharide in an aqueous medium to produce a mixture which forms two phases, one relatively rich in protein and the other relatively rich in polysaccharide and separating the phases so that at least some of the said contaminants originally present in the protein material are transferred from the protein material to the phase relatively rich in polysaccharides.

The protein material may be, for example, milk, skim, milk, or a vegetable protein such as soya protein (soya milk), lupin protein or green leaf protein.

The protein may be used as a suspension, dispersion or solution in water.

The polysaccharide is preferably neutral or anionic e.g. pectin such as high methoxy pectin, alginate, arabic gum, locust bean gum, or kappa-, lambda- or iota-carrageenan. Microbiological or chemically modified polysaccharides may also be suitable, e.g. xanthan, methyl cellulose or carboxymethyl cellulose. The polysaccharide may be used as a solution, suspension or dispersion in water.

The contaminating components may be heavy metals such as multivalent heavy metal ions e.g. lead, mercury or cesium or multivalent radioactive elements such as cesium or strontium. The undesirable, antinutritional or toxic components may be, for example, alkaloids from lupin protein suspensions, bitter components of soya protein suspensions, phytic acid from a soya protein suspension, kunitz trypsin inhibitor from a protein suspension, flatulent oligomeric sugars from vegetable protein suspension, or sugars such as lactose from milk.

The protein material may be contacted with the polysaccharide by adding either component to the other or by mixing the two components together.

The concentration of the protein in the protein material may be from 1 to 30% by weight and preferably from 2 to 25% by weight based on the total weight of the protein material. The concentration of the polysaccharide in the aqueous medium may be from 0.1 to 20% by weight and preferably from 0.2 to 7.5% by weight based on the total weight of the aqueous medium.

The temperature at which the protein material is contacted with the polysaccharide may be from 0°C to a temperature above the denaturing temperature of the protein, e.g. from 2°C to 120°C preferably from 10°C to 45°C and especially from 20°C to 35°C.

The mixture of the protein material and the polysaccharide may be separated in the two phases by simple sedimentation, i.e. by standing for a period of a few seconds to a few minutes. However, the mixture is preferably agitated and then centrifuged to separate the two phases. If desired, the mixture may be centrifuged to separate the two phases without previous agitation. The upper light phase rich in polysaccharide may conveniently be removed by decantation.

When the mixture is agitated, this may conveniently be carried out by gentle stirring for a period of time from 1 second to 60 minutes, preferably from 5 to 40 minutes, and more preferably from 5 to 30 minutes.

The separation of the mixture into two phases gives a heavy concentrated lower phase composed mainly of proteins and a light dilute upper phase composed mainly of polysaccharide and contaminating, antinutritional, undesirable or toxic components. When the mixture is separated by centrifugation, the duration of the centrifugation may conveniently be from 1 to 60 minutes and preferably from 5 to 30 minutes. The centrifugation may have an acceleration from 500 to 100000 g, preferably from 5000 to 50000 g and especially from 10000 to 30000g.

The affinity of the polysaccharide for the contaminating, antinutritional, undesirable or toxic components depends on a variety of factors such as ionic strength, temperature, pH and the degree of esterification of the polysaccharide.

The pH of the aqueous medium is preferably from pH 4 to pH 9 and more preferably from 5.5 to 7.5 and it may be above or below the isoelectric point of the particular protein. The pH is usually above the isoelectric point but may be below the isoelectric point at high ionic strength, e.g. at a salt concentration as NaCl greater than 0.3M. The salt concentration may be from 0.01M to 0.5M and preferably from 0.1 to 0.3M when the pH of the aqueous medium is above the isoelectric point.

If desired, one or more subsequent phase separation operations may be carried out by using a diluted protein concentrate obtained in a previous stage with a fresh or recirculated polysaccharide to obtain the desired concentration of the contaminating, antinutritional, undesirable or toxic component.

Recovery of the polysaccharide from the dilute upper phase may be carried out by precipitation in the form of a complex with a protein, e.g. acidic milk whey, at a pH below the isoelectric point.

We have found that it is possible to reduce the concentration of the contaminating, antinutritional, toxic or undesirable component by from 5 to 10-fold in a single stage operation. If a second stage operation is carried out, the concentration of the undesirable component will be decreased in a similar proportion to that in the first stage. Advantageously, a multiple co-current or counter-current stage process for phase separation may be used to achieve complete or substantially complete removal of the undesirable components from the protein material.

The following Example further illustrates the present invention.

### EXAMPLE 1

To 600 ml of concentrated milk protein suspension (19%DM) contaminated by Radioactive Cesium (361 Bcq/kg) there is added 200 ml of a 2,5% concentration solution of a commercially available anionic polysaccharide (HM pectin) at pH 7.4 and at a temperature of 30°C. The mixture is gently stirred for 15 min and centrifuged at 10000g for 15 min. The 200 ml heavy bottom phase (32% DM) composed mainly of caseins (>75%) presented a radioactivity of 317 Bcq/kg and the 600 ml light phase with a dry matter content DM of 8.5% presented a radioactivity of 293 Bcq/kg. This means if we prepare a 3% milk protein concentration from the pectin treated milk we will obtain a radioactivity of 24 Bcq/kg while we have a 190 Bcq/kg radioactivity for the initial contaminated milk solution.

These results indicate that it is possible to reduce by a factor of 7.5 the concentration of a radioactive element from a contaminated milk suspension in a single stage operation.

A two stage process with a second phase separation with fresh or recirculated pectin solution will lower by a factor of 40-50 the content of the radioactive element in the proteins.

## Claims

1. Use of a membraneless osmosis process for removing antinutritional, toxic, heavy metal or radioactive element contaminants from protein material contaminated either ecologically or by industrial or agricultural activities **characterised in that** the protein material is contacted with a polysaccharide in an aqueous medium to produce a mixture which forms two phases, one relatively rich in protein and the other relatively rich in polysaccharide and separating the phases so that at least some of the said contaminants originally present in the protein material are transferred from the protein material to the phase relatively rich in polysaccharides.

2. A process according to claim 1, wherein the protein material is milk, skim milk, soya milk, green leaf protein. or lupin protein.

3. A process according to claim 1 wherein the polysaccharide is high methoxy pectin, an alginate, arabic gum, locust bean gum or kappa-, lambda- or iota-carrageenan, methyl cellulose, carboxymethyl cellulose or xanthan.

4. A process according to claim 1 wherein the protein and polysaccharide are used as solutions, suspensions or dispersions.

5. A process according to claim 1 wherein the concentration of the protein in the protein material is from 1 to 30% by weight based on the total weight of the protein material.

6. A process according to claim 1 wherein the concentration of the polysaccharide in the aqueous medium is from 0.1 to 20% by weight based on the total weight of the aqueous medium.

7. A process according to claim 1 wherein the temperature at which the protein material is contacted with the polysaccharide is from 2° to 120°C.

8. A process according to claim 1 wherein the mixture is separated into two phases by agitation followed by centrifugation or by sedimentation.

9. A process according to claim 1 wherein the mixture is separated into two phases by centrifugation at an acceleration from 500 to 100000 g for from 1 to 60 minutes.

10. A process according to claim 1 wherein the pH of the aqueous medium is from 4 to 9.

11. A process according to claim 1 wherein one or more subsequent phase separation operations are carried out by using a diluted protein concentrate obtained in a previous stage with a fresh or recirculated polysaccharide to obtain the desired concentration of the contaminating, antinutritional, undesirable or toxic component.

12. A process according to claim 1 wherein a multiple co-current or counter-current stage process for phase separation is used to achieve complete or substantially complete removal of the contaminating, antinutritional, undesirable or toxic component.

## Patentansprüche

1. Verwendung eines membranlosen Osmoseverfahrens zur Entfernung von nicht die Ernährung betreffenden, giftigen Verunreinigungen von Schwermetallen oder radioaktiven Elementen aus Proteinmaterial, das entweder durch umweltbedingte oder industrielle oder landwirtschaftliche Aktivitäten verunreinigt wurde, **dadurch gekennzeichnet, daß** das Proteinmaterial mit einem Polysaccharid in einem wäßrigen Medium in Kontakt gebracht wird um ein zwei Phasen bildendes Gemisch zu bilden, wobei eine mit Protein angereichert und die andere mit Polysaccharid angereichert ist, und die Phasen getrennt werden, so daß mindestens ein Teil der ursprünglich in dem Proteinmaterial vorhandenen Verunreinigungen aus dem Proteinmaterial in die mit Polysacchariden angereicherte Phase überführt wird.

2. Verfahren nach Anspruch 1, wobei das Proteinmaterial Milch, Magermilch, Sojamilch, Grünblatt-Protein oder Lupin-Protein ist.

3. Verfahren nach Anspruch 1, wobei das Polysaccharid Pectin mit hohem Methoxygehalt, ein Alginat, Gum arabicum, Lokustbeangum oder kappa-, lambda- oder iota-Karageenan, Methylcellulose, Carboxymethylcellulose oder Xanthan ist.

4. Verfahren nach Anspruch 1, wobei das Protein und das Polysaccharid in Form von Lösungen, Suspensionen oder Dispersionen eingesetzt werden.

5. Verfahren nach Anspruch 1, wobei die Konzentration des Proteins in dem Proteinmaterial 1 bis 30 Gew.-% beträgt, bezogen auf das Gesamtgewicht des Proteinmaterials.

6. Verfahren nach Anspruch 1, wobei die Konzentration des Polysaccharids in dem wäßrigen Medium 0,1 bis 20 Gew.-% beträgt, bezogen auf das Gesamtgewicht des wäßrigen Mediums.

7. Verfahren nach Anspruch 1, wobei die Temperatur, bei der das Proteinmaterial mit dem Polysaccharid in Kontakt gebracht wird 2 ° bis 120 °C beträgt.

8. Verfahren nach Anspruch 1, wobei das Gemisch durch Rühren gefolgt von Zentrifugation oder Sedimentation in zwei Phasen aufgetrennt wird.

9. Verfahren nach Anspruch 1, wobei das Gemisch durch Zentrifugation bei einer Beschleunigung von 500 bis 100.000 g für 1 bis 60 min in zwei Phasen aufgetrennt wird.

10. Verfahren nach Anspruch 1, wobei der pH-Wert des wäßrigen Mediums 4 bis 9 beträgt.

11. Verfahren nach Anspruch 1, wobei ein oder mehrere nachfolgende Phasentrennschritte durchgeführt werden, indem ein in einem vorhergehenden Schritt erhaltenes verdünntes Proteinkonzentrat mit einem frischen oder rückgeführten Polysaccharid dazu verwendet wird, um die gewünschte Konzentration der verunreinigenden, die Ernährung nicht betreffenden, unerwünschten oder giftigen Komponente zu erhalten.

12. Verfahren nach Anspruch 1, wobei ein gleichläufiges oder gegenläufiges Mehrstufenverfahren zur Phasentrennung verwendet wird, um eine vollständige oder im wesentlichen vollständige Entfernung der verunreinigenden, nicht die Ernährung betreffenden, unerwünschten oder giftigen Komponente zu erreichen.

## Revendications

1. Utilisation d'un procédé d'osmose sans membrane pour éliminer des contaminants antinutritionnels, des contaminants toxiques, des métaux lourds ou des contaminants consistant en éléments radioactifs d'une substance protéique contaminée dans le milieu naturel ou par des activités industrielles ou agricoles, **caractérisée en ce que** la substance protéique est mise en contact avec un polysaccharide dans un milieu aqueux pour produire un mélange qui forme deux phases, l'une relativement riche en protéine et l'autre relativement riche en polysaccharide, et les phases sont séparées de telle sorte qu'au moins une certaine quantité desdits contaminants initialement présents dans la substance protéique soit transférée de la substance protéique à la phase relativement riche en polysaccharide.

2. Procédé suivant la revendication 1, dans lequel la substance protéique est le lait, le lait écrémé, le lait de soja, les protéines de feuilles vertes ou les protéines de lupin.

3. Procédé suivant la revendication 1, dans lequel le polysaccharide consiste en une pectine à haute teneur en groupes méthoxy, un alginate, la gomme arabique, la gomme de caroube ou la kappa-, lambda ou iota-carraghénine, la méthylcellulose, la carboxyméthylcellulose ou le xanthane.

4. Procédé suivant la revendication 1, dans lequel la protéine et le polysaccharide sont utilisés sous forme de solutions, suspensions ou dispersions.

5. Procédé suivant la revendication 1, dans lequel la concentration de la protéine dans la substance protéique est comprise dans l'intervalle de 1 à 30 % en poids sur la base du poids total de la substance protéique.

6. Procédé suivant la revendication 1, dans lequel la concentration du polysaccharide dans le milieu aqueux est comprise dans l'intervalle de 0,1 à 20 % en poids sur la base du poids total du milieu aqueux.

7. Procédé suivant la revendication 1, dans lequel la température à laquelle la substance protéique est mise en contact avec le polysaccharide est comprise dans l'intervalle de 2° à 120°C.

8. Procédé suivant la revendication 1, dans lequel le mélange est séparé en deux phases par agitation, puis par centrifugation ou par sédimentation.

9. Procédé suivant la revendication 1, dans lequel le mélange est séparé en deux phases par centrifugation à une accélération de 500 à 100 000 x g pendant un temps de 1 à 60 minutes.

10. Procédé suivant la revendication 1, dans lequel le pH du milieu aqueux est compris dans la plage de 4 à 9.

11. Procédé suivant la revendication 1, dans lequel une ou plusieurs étapes ultérieures de séparation de phases sont effectuées en utilisant un concentré de protéine dilué obtenu dans une étape précédente avec un polysaccharide frais ou de recirculation afin de parvenir à la concentration désirée en constituant contaminant, anti-nutritionnel, indésirable ou toxique.

12. Procédé suivant la revendication 1, dans lequel un procédé à étapes multiples à co-courant ou contre-courant pour la séparation de phases est utilisé afin de parvenir à l'élimination totale ou pratiquement totale du constituant contaminant, antinutrionnel, indésirable ou toxique.
